(19) Europäisches Patentamt
European Patent Office
Office européen des brevets

(11) **EP 2 931 843 B1**

(12) **FASCICULE DE BREVET EUROPEEN**

(45) Date de publication et mention de la délivrance du brevet:
**01.05.2019 Bulletin 2019/18**

(21) Numéro de dépôt: **13802965.7**

(22) Date de dépôt: **10.12.2013**

(51) Int Cl.:
*C10G 25/03* (2006.01)     *B01D 15/20* (2006.01)
*C07C 7/13* (2006.01)     *C07C 13/64* (2006.01)
*C10G 29/04* (2006.01)     *B01D 15/14* (2006.01)
*B01D 15/18* (2006.01)     *B01D 15/26* (2006.01)
*B01D 15/42* (2006.01)

(86) Numéro de dépôt international:
**PCT/EP2013/076103**

(87) Numéro de publication internationale:
**WO 2014/090812 (19.06.2014 Gazette 2014/25)**

(54) **PROCEDE DE SEPARATION D'ISO-ALCANES ET DE CYCLOALCANES A PARTIR D'UNE HUILE**

VERFAHREN ZUR ABSCHEIDUNG VON ISOALKANEN UND CYCLOALKANEN AUS EINEM ÖL

METHOD FOR SEPARATING ISO-ALKANES AND CYCLOALKANES FROM AN OIL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2012 FR 1261888**

(43) Date de publication de la demande:
**21.10.2015 Bulletin 2015/43**

(73) Titulaire: **Total SA**
**92400 Courbevoie (FR)**

(72) Inventeurs:
• **SERRES-PIOLE, Coralie**
  **F-64000 Pau (FR)**
• **BERRUT, Jean-Bernard**
  **F-64000 Pau (FR)**

(74) Mandataire: **Hirsch & Associés**
**137, rue de l'Université**
**75007 Paris (FR)**

(56) Documents cités:
**EP-A2- 0 399 851     US-A1- 2008 053 902**

• **ZHIBIN WEI ET AL: "Thiadiamondoids as proxies for the extent of thermochemical sulfate reduction", ORGANIC GEOCHEMISTRY, vol. 44, 1 mars 2012 (2012-03-01), pages 53-70, XP055060176, ISSN: 0146-6380, DOI: 10.1016/j.orggeochem.2011.11.008**
• **MICHIELE AUDINO ET AL: "Macrocyclic alkanes in crude oils and sediment extracts: enrichment using molecular sieves", ORGANIC GEOCHEMISTRY, vol. 35, no. 5, 1 mai 2004 (2004-05-01), pages 661-663, XP055060173, ISSN: 0146-6380, DOI: 10.1016/j.orggeochem.2004.01.001 cité dans la demande**

**Description**

**Domaine de l'invention**

La présente invention concerne un procédé de traitement d'un mélange de composés organiques, en particulier d'une huile, afin d'en récupérer différents constituants. Ce procédé a notamment pour objectif de permettre la séparation d'une fraction d'iso-alcanes et de cycloalcanes à partir d'un échantillon d'un mélange de composés organiques, ce procédé comprenant une étape de séparation par chromatographie liquide.

Lorsqu'il est appliqué à un mélange organique de type huile minérale, le procédé de l'invention permet d'isoler des mélanges de composés biomarqueurs caractéristiques de l'origine de ces huiles, tels que notamment des diamandoïdes.

La présente invention concerne par ailleurs un kit de séparation par chromatographie liquide ainsi qu'un dispositif de séparation par chromatographie liquide et d'analyse d'un échantillon, notamment d'un échantillon d'un mélange de composés organiques.

L'invention concerne enfin l'utilisation d'un tel kit ou d'un tel dispositif pour séparer une fraction d'iso-alcanes et de cycloalcanes à partir d'un échantillon comprenant un mélange de composés organiques.

**Arrière-plan technique**

Le pétrole est une huile minérale formée d'un mélange de composés organiques piégés dans des formations géologiques très diverses. Ainsi, chaque gisement pétrolier recèle une qualité particulière de pétrole, déterminée par la proportion relative des différents composés organiques le constituant parmi lesquels des biomarqueurs.

Ces composés organiques sont essentiellement des hydrocarbures, parmi lesquels des composés saturés : les n-alcanes, les iso-alcanes et les cycloalcanes, des composés aromatiques, des résines ou encore des asphaltènes.

Parmi les cycloalcanes, on peut citer les diamandoïdes, les terpanes tricycliques, les hopanes, les stéranes. Parmi les iso-alcanes, on peut mentionner le prystane, le phytane.

Les diamandoïdes sont des composés organiques saturés polycycliques à 3 dimensions qui se présentent sous forme de cage et peuvent être substitués, ou non, par des groupements alkyles. Parmi ces diamandoïdes, on peut citer, à titre non limitatif, l'adamantane (composé en $C_{10}H_{16}$), le diamantane ($C_{14}H_{20}$) ou encore le triamantane ($C_{18}H_{24}$) ainsi que leurs homologues comprenant au moins une ramification alkyle.

Ces diamandoïdes sont donc des constituants naturels du pétrole, que l'on dénomme également "huile" dans la suite de la présente description. Les diamandoïdes sont couramment rencontrés dans les huiles à des concentrations supérieures à 1 ppm.

En raison de leurs propriétés physico-chimiques uniques (haute stabilité thermique, points de fusion et de pression de vapeur élevés), les diamandoïdes présentent depuis plusieurs années un intérêt grandissant dans un grand nombre de domaines (industrie pharmaceutique, médecine, nanotechnologie, microélectronique,...) dont le domaine pétrolier.

En outre, du fait de leur grande stabilité dans les huiles, il est intéressant de conduire des analyses, tant qualitatives que quantitatives, sur ces diamandoïdes pour avoir une meilleure compréhension des systèmes pétroliers, en particulier des huiles biodégradées et craquées. De telles analyses permettent notamment d'évaluer la maturité géologique d'un champ d'huile et/ou le niveau de maturité thermique d'huiles, de distinguer deux huiles et/ou de caractériser des mélanges d'huiles, d'évaluer le degré d'avancement de biodégradation des huiles, de déterminer les corrélations huile/huile ou roche-mère/huile. L'intérêt des biomarqueurs présents dans les huiles, et des diamandoïdes en particulier, pour réaliser ces analyses, explique la multiplication des études réalisées visant à séparer et/ou concentrer et/ou identifier les iso-alcanes et les cycloalcanes en général, et les diamandoïdes, en particulier.

De telles analyses qualitatives et/ou quantitatives sont en général conduites par chromatographie gazeuse (GC) ou par chromatographie gazeuse couplée à de la spectrométrie de masse (GC/MS). Les analyses isotopiques sont, quant-à-elles, réalisées par chromatographie gazeuse couplée à la spectrométrie de masse de rapport isotopique (GC/irMS).

Toutefois, au vu de la grande variété des composés formant l'huile et de la quantité très faible de ces composés d'intérêt au sein d'une huile, il s'avère nécessaire de préparer l'échantillon d'huile avant d'effectuer son analyse chromatographique (par GC, GC/MS ou GC/irMS) afin de purifier, d'isoler et/ou de concentrer les composés particuliers que l'on souhaite étudier.

Ainsi, dans la littérature, sont décrits des procédés de séparation de fractions d'iso-alcanes et de cycloalcanes qui comprennent plusieurs étapes.

On peut notamment se reporter à la publication scientifique de L. Huang et al. ("A novel method for isolation of diamondoids from crude oils for compound-specific isotope analysis" - Organic Geochemistry - 42 (2011) p.566-571) qui décrit un procédé en trois étapes:

- une première étape de séparation par chromatographie liquide au travers d'une colonne comprenant un gel de silice activée pour recueillir une fraction saturée d'hydrocarbures comprenant les n-alcanes et les hydrocarbures cycliques et branchés
- une étape de concentration sous azote de cette fraction saturée d'hydrocarbures,
- une deuxième étape de séparation de cette fraction saturée d'hydrocarbures concentrée par chromatographie liquide au travers d'une colonne comprenant un tamis moléculaire (zéolithe de type silicalite ZSM-5) pour recueillir la fraction d'hydrocarbures cycliques et branchés.

On peut également se reporter à la publication scientifique de M. Audino et al. ("Macrocyclic alkanes in crude oils and sediment extracts: enrichment using molecular sieves" - Organic Geochemistry - 35 (2004) p.661-663) qui décrit un procédé comprenant au moins deux étapes de séparation chromatographique successives sur des colonnes comprenant chacune un tamis moléculaire déterminé, étant noté qu'une étape intermédiaire de filtration suivie d'une étape intermédiaire d'évaporation est nécessaire entre chaque étape de séparation chromatographique. La publication de M. Zhibin Wei et al. "Thidiamondoids as proxies for the extent of thermochemical sulfate réduction" - Organic Geochemistry - 44 (2012) 53-70, divulgue un procédé de séparation d'une fraction d'iso-alcanes.

On observe que les procédés qui viennent d'être décrits comportent au moins deux étapes de séparation par chromatographie liquide pour aboutir à l'obtention de la fraction d'iso-alcanes et de cycloalcanes recherchée. En outre, les procédés décrits dans ces publications comprennent également au moins une étape intermédiaire d'évaporation des fractions intermédiaires collectées avant la deuxième étape de séparation, cette étape intermédiaire d'évaporation étant éventuellement précédée d'une étape de filtration, comme dans la publication de M. Audino et al.

Or, la multiplication des étapes augmente nécessairement les risques de perte et/ou de contamination des échantillons. Plus particulièrement, l'étape intermédiaire d'évaporation des fractions collectées peut entraîner la perte, plus ou moins partielle, des composés les plus légers tels que les adamantanes.

Le but de la présente invention est par conséquent de fournir un procédé de séparation par chromatographie liquide d'une fraction d'iso-alcanes et de cycloalcanes à partir d'un échantillon d'un mélange de composés organiques palliant au moins partiellement les inconvénients précités.

Plus particulièrement, l'invention se rapporte à un procédé de séparation qui permette d'isoler, à partir d'un échantillon d'un tel mélange de composés organiques, une fraction d'iso-alcanes et de cycloalcanes (contenant notamment les diamandoïdes) et ce, en un minimum d'étapes, sans risque de contamination des échantillons et/ou de perte des composés, notamment des composés les plus légers, engendrées par des étapes intermédiaires d'évaporation et de filtration éventuelle des procédés de l'art antérieur.

## Résumé de l'invention

A cette fin, la présente invention propose un procédé de séparation d'une fraction d'iso-alcanes et de cycloalcanes défini dans la revendication 1.

Suivant des modes de réalisation préférés, l'invention comprend une ou plusieurs des caractéristiques suivantes :

- le mélange de composés organiques provient d'un gisement de pétrole brut, d'huiles de schiste ou de coupes de pétrole.

- le mélange de composés organiques comprend des biomarqueurs choisis parmi les adamantanes, les diamantanes et les triamantanes.

Préférentiellement, la deuxième phase stationnaire (12) est essentiellement constituée d'une silice imprégnée de nitrate d'argent

- la colonne (1) comprend en outre une troisième phase stationnaire (13) en un matériau capable d'adsorber les composés dont la polarité est supérieure à la polarité des composés adsorbés par le matériau de la deuxième phase stationnaire (12).

- la troisième phase stationnaire (13) est en un matériau capable d'adsorber les composés de haut poids moléculaire et/ou hétéro-atomiques, notamment les hétéroalkyles comprenant au moins un atome choisi parmi : N, S et O, et/ou les résines et asphaltènes avec des masses moléculaires comprises entre 300 et 10 000 g/mol environ.

- la troisième phase stationnaire (13) comprend une silice choisie parmi une silice vierge, une silice greffée par des groupes aminoalkyles, notamment aminopropyles et une silice greffée par des groupes cyanoalkyles et préférentiellement par des groupes cyanopropyles. Préférentiellement, la troisième phase stationnaire (13) est essentiellement constituée d'une silice choisie parmi une silice vierge, une silice greffée par des groupes aminoalkyles, notamment aminopropyles et une silice greffée par des groupes cyanoalkyles et préférentiellement par des groupes cyanopropyles.

- en suivant le sens de l'élution, l'éventuelle troisième phase stationnaire (13) est disposée avant la deuxième phase stationnaire (12), la deuxième phase stationnaire (12) étant elle-même disposée avant la première phase stationnaire (11).

- l'étape de séparation par chromatographie liquide est une étape de séparation par chromatographie basse pression, dans laquelle la phase liquide est éluée sous une pression inférieure à 25 bars, avantageusement comprise entre 3 et 10 bars et, de préférence, comprise entre 7 et 9 bars.

- l'éluant est choisi parmi l'isooctane, le n-octane et leurs mélanges, avantageusement l'iso-octane.

- le procédé comprend en outre au moins une étape de préparation de l'échantillon préalable à l'étape de séparation, cette étape de préparation étant choisie parmi une étape de mise en solution, une étape de filtration, une étape de chauffage ou la combinaison de deux ou plus de ces étapes.

La présente invention permet de surmonter les inconvénients des procédés de l'art antérieur. Elle fournit plus particulièrement un procédé de séparation d'une fraction d'iso-alcanes et de cycloalcanes à partir d'un échantillon d'un mélange de composés organiques, en particulier d'une huile minérale, à la fois simple et rapide, et comprenant un nombre d'étapes limité par rapport aux procédés de l'art antérieur. Le procédé de séparation selon l'invention permet en particulier d'éviter les risques de contamination et/ou de perte de certains des composés présents dans l'échantillon d'huile, risques qui sont inhérents à la multiplication des étapes des procédés de l'art antérieur, et notamment aux étapes intermédiaires d'évaporation, éventuellement précédées d'étapes intermédiaires de filtration.

Ce résultat est atteint grâce à la mise en oeuvre d'une étape de séparation par chromatographie liquide réalisée au moyen d'une colonne chromatographique comprenant au moins deux phases stationnaires, la première phase stationnaire étant en un matériau capable d'adsorber les composés apolaires acycliques présents dans l'échantillon et une deuxième phase stationnaire étant en un matériau capable d'adsorber les composés aromatiques et polaires présents dans l'échantillon d'huile. Eventuellement, une troisième phase stationnaire capable de retenir les composés très polaires peut être prévue.

Ainsi, la fraction d'iso-alcanes et de cycloalcanes, qui comprend en particulier les diamandoïdes, est recueillie en sortie de colonne tandis les autres composés présents dans l'échantillon, tels que les n-alcanes, les composés aromatiques, les résines et les asphaltènes, et éventuellement les hétéroalkyles, sont adsorbés sur les phases stationnaires de la colonne.

Si le procédé de séparation selon l'invention permet d'optimiser, en une étape, la sélectivité de la séparation chromatographique par rapport aux procédés connus de l'art antérieur, il permet également de recueillir, en sortie de colonne, une fraction plus importante d'iso-alcanes et de cycloalcanes par rapport à la teneur initiale de ces composés dans l'échantillon d'huile. On peut notamment recueillir plus de 85% des iso-alcanes et des cycloalcanes présents dans l'échantillon du mélange de composés organiques, tandis que les méthodes de séparation actuelles permettent de recueillir au mieux 50% des iso-alcanes et des cycloalcanes présents dans un échantillon.

L'invention s'applique plus particulièrement aux fractions huileuses issues du pétrole. Notamment, elle s'applique au pétrole brut et aux mélanges d'huiles issus du raffinage du pétrole brut.

Le procédé de séparation selon l'invention présente également l'avantage d'être facilement reproductible, de conférer des résultats fiables et ce, avec des temps d'analyse plus courts que ceux des procédés de l'art antérieur.

Le procédé de séparation selon l'invention peut être mis en oeuvre à l'échelle analytique (quelques $\mu$l d'échantillon) ou à l'échelle préparative (quelques centaines de $\mu$l d'échantillon, typiquement de l'ordre de 300 $\mu$l). Les conditions de séparation à l'échelle analytique par chromatographie liquide basse pression peuvent être directement extrapolées par l'homme du métier à l'échelle préparative au moyen de calculs de routine.

L'invention se rapporte également à un procédé de séparation de diamandoïdes à partir d'un échantillon d'un mélange de composés organiques. Ce procédé comprend la mise en oeuvre du procédé de séparation tel que décrit ci-dessus suivie d'une étape de séparation des diamandoïdes à partir de la fraction éluée.

L'invention se rapporte en outre à un kit de séparation par chromatographie liquide. Un tel kit est défini dans la revendication 10.

Suivant des modes de réalisation préférés, le kit selon l'invention comprend une ou plusieurs des caractéristiques suivantes :

- la colonne (1) comprend en outre une troisième phase stationnaire (13) en un matériau capable d'adsorber les composés dont la polarité est supérieure à la polarité des composés adsorbés par le matériau de la deuxième phase stationnaire (12).

- la troisième phase stationnaire (13) est en un matériau capable d'adsorber les composés de haut poids moléculaire et/ou hétéro-atomiques. La troisième phase stationnaire comprend, avantageusement, une silice choisie parmi une silice vierge, une silice greffée par des groupes aminoalkyles en particulier aminopropyles et une silice greffée par des groupes cyanoalkyles et préférentiellement par des groupes cyanopropyles.

- en suivant le sens de l'élution, l'éventuelle troisième phase stationnaire (13) est disposée avant la deuxième phase stationnaire (12), la deuxième phase stationnaire (12) étant elle-même disposée avant la première phase stationnaire (11).

L'invention se rapporte également à un dispositif de séparation par chromatographie liquide et d'analyse d'un échantillon. Un tel dispositif est défini dans la revendication 13.

Selon un mode particulier de réalisation, le procédé de séparation selon l'invention est mis en oeuvre au moyen du kit et/ou au moyen du dispositif conformes à l'invention.

L'invention se rapporte enfin à une utilisation du kit et/ou du dispositif pour séparer une fraction d'iso-alcanes et de cycloalcanes notamment de diamandoïdes à partir d'un échantillon comprenant un mélange de composés organiques, ce mélange pouvant notamment provenir d'un gisement de pétrole brut, d'huiles de schiste ou de coupes de pétrole.

**Brève description des figures**

La figure 1 représente un schéma de principe d'un mode de réalisation du dispositif de séparation par chromatographie liquide et d'analyse selon l'invention, ce dispositif comprenant le kit de séparation par chromatographie liquide selon l'invention.

La figure 2 représente un schéma de détail d'un mode de réalisation du kit de séparation par chromatographie liquide selon l'invention.

Sur les figures 3A et 3B, sont reportés deux chromatogrammes issus de l'analyse par chromatographie gazeuse avec détecteur à ionisation de flamme (GC/FID), la figure 3A correspondant au chromatogramme d'un échantillon avant mise en oeuvre du procédé de séparation selon l'invention et la figure 3B correspondant au chromatogramme d'une fraction d'iso-alcanes et de cycloalcanes collectée après mise en oeuvre du procédé de séparation selon l'invention.

Sur les figures 4A et 4B, sont reportés deux chromatogrammes issus de l'analyse par chromatographie gazeuse couplée à de la spectrométrie de masse en courant ionique total (GC/MS) avec image TIC en mode SIM (Single Ion Monitoring), la figure 4A correspond au chromatogramme de ce même échantillon avant mise en oeuvre du procédé de séparation selon l'invention et la figure 4B correspond au chromatogramme d'une fraction d'iso-alcanes et de cycloalcanes collectée après mise en oeuvre du procédé de séparation selon l'invention.

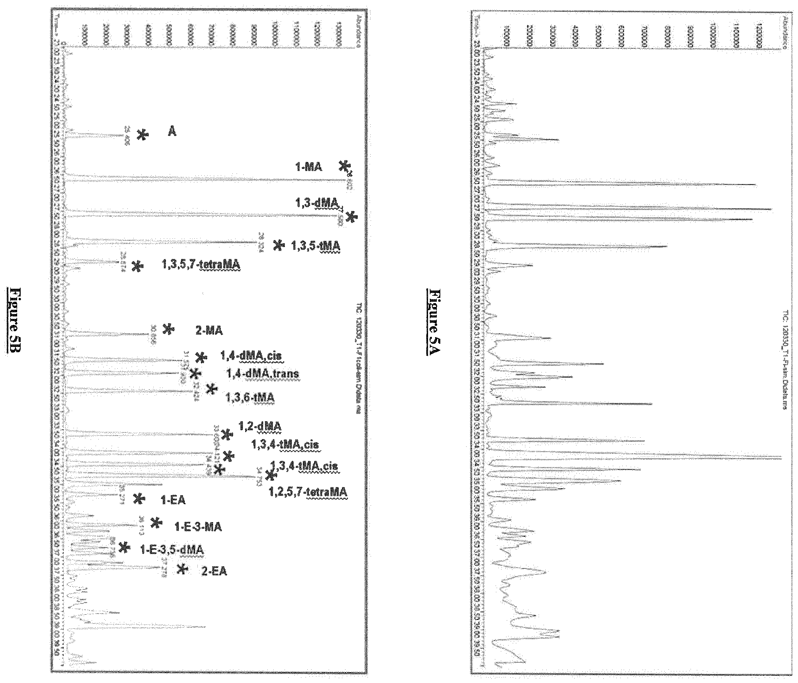

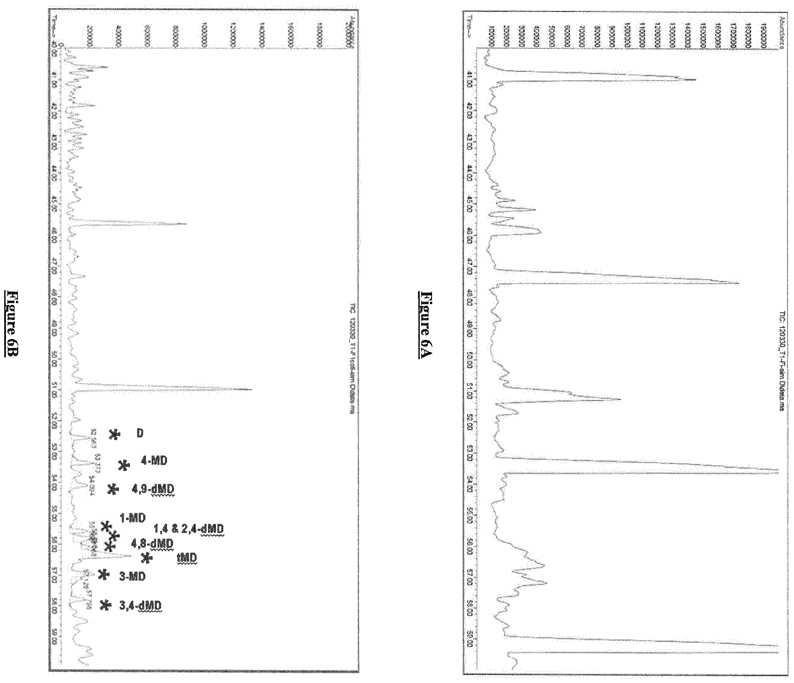

Sur les figures 5A, 5B, 6A et 6B, sont reportés quatre chromatogrammes issus de l'analyse par chromatographie gazeuse couplée à de la spectrométrie de masse en courant ionique total (GC/MS) avec image TIC en mode SIM (Single Ion Monitoring), les figures 5A et 6A correspondent aux chromatogrammes du même échantillon avant mise en oeuvre du procédé de séparation selon l'invention et les figures 5B et 6B correspondent aux chromatogrammes d'une fraction d'iso-alcanes et de cycloalcanes collectée après mise en oeuvre du procédé de séparation selon l'invention. Plus particulièrement, les figures 5A et 5B illustrent la fenêtre de temps comprise entre 20 et 40 minutes, qui correspond à la fenêtre de temps de rétention des adamantanes, tandis que les figures 6A et 6B illustrent la fenêtre de temps comprise entre 40 et 60 minutes, qui correspond à la fenêtre de temps de rétention des diamantanes.

La figure 7 est un histogramme représentatif du pourcentage d'élimination des n-alcanes dans la fraction d'iso-alcanes et de cycloalcanes après mise en oeuvre du procédé selon l'invention.

La figure 8 est un histogramme représentatif du pourcentage de collecte des diamandoïdes dans la fraction d'iso-alcanes et de cycloalcanes recueillie après mise en oeuvre du procédé selon l'invention.

Afin de permettre l'identification des diamandoïdes repérés par leur abréviation couramment utilisée telle qu'elle apparaît sur les figures 5B, 6B et 8, on pourra se reporter au tableau 1 ci-dessous qui précise, pour chaque diamandoïde, sa formule brute, son numéro d'enregistrement CAS ainsi que son abréviation.

**Tableau 1**

| Composés | Abréviations | Formule brute | N ° CAS |
|---|---|---|---|
| Adamantane | A | $C_{10}H_{16}$ | 281-23-2 |
| 1-Me-adamantane | 1-MA | $C_{11}H_{18}$ | 768-91-2 |
| 1,3-diMe-adamantane | 1,3-dMA | $C_{12}H_{20}$ | 702-79-4 |
| 1,3,5-triMe-adamantane | 1,3,5-tMA | $C_{13}H_{22}$ | 707-35-7 |
| 1,3,5,7-tetraMe-adamantane | 1,3,5,7-tetraMA | $C_{14}H_{24}$ | 1687-36-1 |
| 2-Me-adamantane | 2-MA | $C_{11}H_{18}$ | 700-56-1 |
| Cis-1,4-diMe-adamantane | 1,4-dMA,cis | $C_{12}H_{20}$ | 24145-89-9 |
| Trans-1,4-diMe-adamantane | 1,4-dMA,trans | $C_{12}H_{20}$ | 24145-88-8 |
| 1,3,6-triMe-adamantane | 1,3,6-tMA | $C_{13}H_{22}$ | 24139-37-5 |
| 1,2-diMe-adamantane | 1,2dMA | $C_{12}H_{20}$ | 16207-81-1 |
| Cis-1,3,4-triMe-adamantane | 1,3,4-tMA,cis | $C_{13}H_{22}$ | 24145-90-2 |
| Trans-1,3,4-triMe-adamantane | 1,3,4-tMA,trans | $C_{13}H_{22}$ | 24145-91-3 |
| 1,2,5,7-tetraMe-adamantane | 1,2,5,7-tetraMA | $C_{14}H_{24}$ | 34946-70-7 |
| 1-Et-adamantane | 1-EA | $C_{12}H_{20}$ | 770-69-4 |
| 1-Et-3-Me-adamantane | 1-E-3-MA | $C_{13}H_{22}$ | 1687-34-9 |
| 1-Et-3,5-diMe-adamantane | 1-E-3,5-dMA | $C_{14}H_{24}$ | 1687-35-0 |
| 2-Et-adamantane | 2-EA | $C_{12}H_{20}$ | 14451-87-7 |
| Diamantane | D | $C_{14}H_{20}$ | 2292-79-7 |
| 4-Me-diamantane | 4-MD | $C_{15}H_{22}$ | 28375-86-2 |
| 4,9-diMe-diamantane | 4,9-dMD | $C_{16}H_{24}$ | 70459-27-7 |
| 1-Me-diamantane | 1-MD | $C_{15}H_{22}$ | 26460-76-4 |
| 1,4 et 2,4-diMe-diamantane | 1,4 & 2,4-dMD | $C_{16}H_{24}$ | 74340-66-8 74340-67-9 |
| 4,8-diMe-diamantane | 4,8-dMD | $C_{16}H_{24}$ | 70340-68-0 |
| TriMe-diamantane | tMD | $C_{17}H_{26}$ | |
| 3-Me-diamantane | 3-MD | $C_{15}H_{22}$ | 30545-28-9 |
| 3,4-diMe-diamantane | 3,4-dMD | $C_{16}H_{24}$ | 70340-69-1 |
| Triamantane | T | $C_{18}H_{24}$ | 13349-10-5 |
| 9-Me-triamantane | 9-MT | $C_{19}H_{26}$ | 67615-85-4 |
| DiMe-triamantane | dMT | $C_{21}H_{30}$ | |

## Description détaillée

L'invention concerne en premier lieu un procédé de séparation d'iso-alcanes et de cycloalcanes à partir d'un échantillon de composés organiques par un procédé comprenant au moins une étape de chromatographie. Cette étape de chromatographie est mise en oeuvre au moyen d'une colonne comprenant une succession de deux ou trois phases stationnaires.

La première phase stationnaire est en un matériau capable d'adsorber les composés apolaires acycliques, notamment les n-alcanes. La deuxième phase stationnaire (12) est en un matériau capable d'adsorber les composés aromatiques et les composés polaires (résines, asphaltènes). La troisième phase stationnaire, qui est optionnelle, est en un matériau capable d'adsorber les composés dont la polarité est supérieure à la polarité des composés adsorbés par le matériau de la deuxième phase stationnaire, notamment les composés de masse moléculaire élevée tels que les résines et asphaltènes avec des masses moléculaires comprises entre 300 et 10 000 g/mol environ et/ou les composés hétéroatomiques, notamment ceux à base de N, S et/ou O. L'homme du métier connait les matériaux susceptibles de satisfaire chacune de ces trois conditions et peut, par un simple test de routine, vérifier si un matériau convient ou non à cette utilisation. Il peut notamment tester, pour chaque famille de composés, si elle est retenue ou non sur un support, dans les conditions d'élution qui sont décrites ci-dessous dans la partie expérimentale. Avantageusement, chacune des phases stationnaires est choisie pour retenir au moins 95 % en masse, par rapport à la masse totale de l'échantillon, des composés énumérés ci-dessus respectivement pour chaque phase stationnaire, mieux, au moins 98%, encore mieux, au moins 99%.

Avantageusement encore, les phases stationnaires sont choisies pour permettre l'élution au travers de la colonne de chromatographie d'au moins 70 % en masse, par rapport à la masse totale de l'échantillon, des composés iso-alcanes et cycloalcanes, et notamment les composés d'intérêt énumérés ci-dessus, mieux au moins 75%, encore mieux, au moins 80%, préférentiellement au moins 85%, avantageusement au moins 90%, et encore plus avantageusement au moins 95%.

Le procédé de séparation de l'invention concerne plus particulièrement les mélanges de composés organiques provenant d'un gisement de pétrole brut, d'huiles de schiste ou de coupes de pétrole. Ce procédé concerne plus particulièrement les mélanges de composés organiques comprenant, outre un ou plusieurs composés tels que décrits ci-dessus et que l'on cherche à éliminer, un ou plusieurs composés d'intérêt choisis notamment parmi : des cycloalcanes, et l'on peut citer les diamandoïdes, notamment les adamantanes, les diamantanes et les triamantanes, les terpanes tricycliques, les hopanes, les stéranes ; des iso-alcanes, et l'on peut mentionner le prystane, le phytane.

Les phases stationnaires sont désignées sous le nom de première, seconde et troisième phase stationnaire dans l'ensemble de la description en référence à leur ordre d'introduction dans la colonne de chromatographie. Lorsque la colonne de chromatographie est éluée, l'éluant traverse tout d'abord la troisième phase stationnaire (si présente), puis la seconde, puis la première phase stationnaire.

Le procédé de l'invention peut inclure, outre l'étape d'élution décrite ci-dessous de façon détaillée, d'autres étapes, notamment des étapes de préparation d'échantillons, mais aussi des étapes de traitement des fractions éluées. Enfin, on peut prévoir que le procédé comprenne un traitement de la colonne après élution des composés d'intérêt (biomarqueurs iso-alcanes et cycloalcanes) de façon à recueillir certains composants de l'échantillon qui ont été retenus sur l'une des phases stationnaires.

## Description de modes de réalisation de l'invention

D'autres caractéristiques et avantages de l'invention apparaîtront à la lecture de la description qui suit d'un mode de réalisation préféré de l'invention, donné à titre d'exemple et en référence aux figures annexées.

## Dispositif de séparation

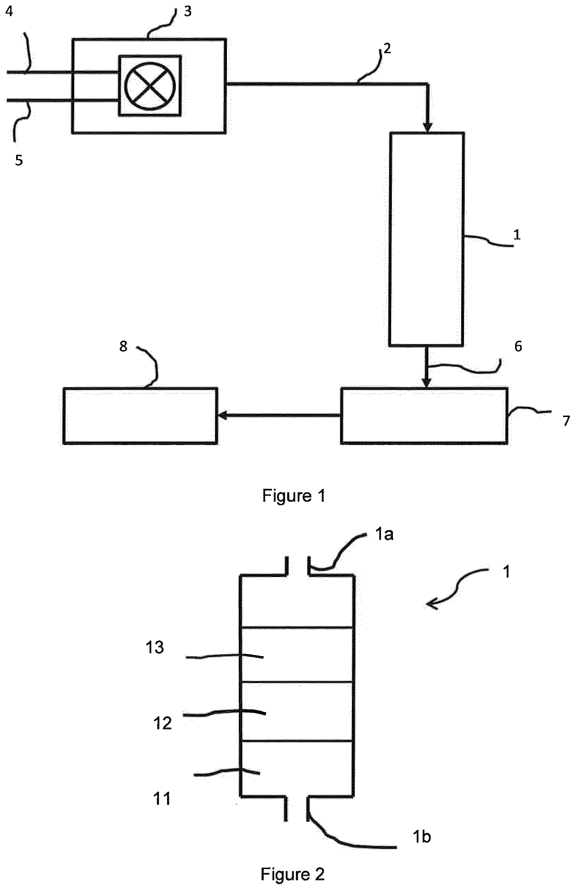

La figure 1 représente un schéma de principe d'un mode de réalisation du dispositif de séparation par chromatographie liquide et d'analyse d'une fraction d'iso-alcanes et de cycloalcanes à partir d'un échantillon d'un mélange de composés organiques selon l'invention. Ce dispositif de séparation peut avantageusement mettre en oeuvre le kit de séparation par chromatographie liquide selon l'invention tel que représenté sur la figure 2.

Le dispositif de séparation comprend une colonne 1 qui est une colonne d'extraction sur phase solide, également dénommée colonne SPE.

Cette colonne 1 est reliée en amont par des moyens de connexion 2 à un système de pompe 3. Ce système de pompe 3 est lui-même relié en amont à des moyens d'introduction 4 de la phase mobile ou éluant.

Les moyens d'introduction 5 de l'échantillon du mélange de composés organiques peuvent être connectés en amont de la colonne 1 au moyen d'un dispositif d'injection situé en aval du système de pompe 3 (variante non représentée sur la figure 1). Mais, de manière avantageuse, et comme schématisé sur la figure 1, les moyens d'introduction 5 de l'échantillon sont également directement connectés au système de pompe 3, ce qui présente l'avantage de limiter les risques de pollution et/ou de perte de composés présents dans l'échantillon du fait de l'absence de joint.

La colonne 1 est reliée en aval, par des moyens de connections 6, à des moyens de détection et d'analyse 7 des composés formant la fraction éluée. Ces moyens de détection et d'analyse 7, qui peuvent par exemple être constitués par un réfractomère différentiel, sont eux-mêmes connectés à des moyens de collecte 8 de la fraction éluée isolée à partir de l'échantillon.

On peut, selon une variante, prévoir que le dispositif de séparation selon l'invention comporte des moyens de collecte 8, mais pas de moyens d'analyse et que l'analyse des fractions éluées soit réalisée séparément.

L'ensemble constitué par la colonne 1 et les moyens de connexion 2, 6 est connu sous la terminologie de module DASi™ (Dissolve Absorb Sample injection). Un tel module est couramment utilisé pour l'introduction, dans une colonne chromatographique, de composés présentant une forte viscosité ou une faible solubilité. La mise en oeuvre d'un tel module permet un changement aisé de la colonne 1 après son utilisation.

Selon l'invention, la colonne 1 comprend de manière générale au moins deux phases stationnaires.

Avantageusement, le dispositif de séparation comporte des moyens d'automatisation du procédé (non représentés), en particulier des moyens permettant le contrôle de l'introduction des échantillons dans les colonnes, et/ou la récupération des fractions éluées en sortie de colonne, et/ou le contrôle des moyens d'analyse, et/ou la récupération et le stockage des données analytiques. De tels moyens (ordinateurs et logiciels) sont bien connus de l'homme du métier.

_Kit de séparation_

Dans l'illustration de la figure 2, qui représente une version avantageuse du kit de séparation par chromatographie liquide de l'invention, la colonne 1 est munie d'une entrée la et d'une sortie 1b. La longueur de la colonne 1 est typiquement comprise entre 5 et 15 cm, avantageusement entre 7 et 10 cm et, préférentiellement, entre 7 et 8 cm tandis que son diamètre intérieur est typiquement compris entre 1,5 et 3 cm, avantageusement entre 1,5 et 2 cm et, préférentiellement, entre 1,5 et 1,7 cm.

La colonne 1 de la figure 2 comprend trois phases stationnaires 11, 12, 13.

La première phase stationnaire 11 est en un matériau capable d'adsorber les composés apolaires acycliques de l'échantillon et, plus particulièrement, les n-alcanes.

La première phase stationnaire 11 comprend une zéolithe choisie parmi les zéolithes de type aluminosilicate de sodium, en particulier celles appartenant à la famille des pentasiles. De préférence, dans ces zéolithes, le rapport molaire Si sur Al vérifie : Si/Al>10. On peut citer par exemple la zéolithe de type ZSM-5 de formule chimique : $Na_nAl_nSi_{96-n}O_{192}\cdot16H_2O$ (0<n<27), commercialisée par la société Fisher Scientific. Ces zéolithes peuvent être utilisées directement ou être activées par un traitement thermique.

Préférentiellement, la première phase stationnaire comprend une zéolithe ZSM-5 commercialisée par la société Fisher Scientific. Avantageusement, avant sa mise en oeuvre, la zéolithe ZSM-5 est activée par chauffage, en particulier un chauffage à une température de l'ordre de 360°C pendant 12 heures est recommandé.

La deuxième phase stationnaire 12 est en un matériau capable d'adsorber les composés aromatiques et les composés polaires de l'échantillon (résines, asphaltènes).

La deuxième phase stationnaire 12 comprend une silice imprégnée de nitrate d'argent $AgNO_3$. On peut notamment mettre en oeuvre la silice enregistrée sous le numéro CAS 7761-88-8 présentant une taille de particules de 62 µm et une densité de 4,35 g/ml à 25°C, cette silice étant notamment disponible auprès de la société Sigma Aldrich. Cette silice imprégnée de nitrate d'argent peut être utilisée directement, sans traitement préalable.

La troisième phase stationnaire 13 est en un matériau capable d'adsorber les composés de l'échantillon qui présentent une polarité supérieure à la polarité des composés adsorbés par le matériau de la deuxième phase stationnaire 12 et, plus particulièrement, les composés de haute masse moléculaire tels que résines et asphaltènes avec des masses moléculaires comprises entre 300 et 10 000 g/mol environ, et/ou les composés hétéro-atomiques, notamment les hétéroalkyles comprenant un ou plusieurs atomes choisis parmi : N, S et O. Avantageusement, la troisième phase stationnaire 13 comprend une silice qui peut être choisie parmi une silice vierge, une silice greffée par des groupes aminoalkyles, notamment aminoalkyles en C1-C5, de préférence aminopropyles et une silice greffée par des groupes cyanoalkyles, notamment cyanoalkyles en C1-C5, et, préférentiellement, par des groupes cyanopropyles. On peut en particulier utiliser une silice greffée par des groupes cyanopropyles présentant une taille de particules comprise entre 40 et 63 µm commercialisée par les sociétés Merck et VWR. Cette silice vierge ou greffée convenant pour la troisième phase stationnaire 13 peut être utilisée directement, sans traitement préalable.

Comme représenté sur la figure 2, la troisième phase stationnaire 13 est disposée au-dessus de la deuxième phase stationnaire 12, cette deuxième phase stationnaire 12 étant elle-même disposée au-dessus de la première phase stationnaire 11. Selon une version particulièrement préférée de l'invention, la colonne 1 comprend les trois phases stationnaires 11, 12, 13 successives suivantes, énoncées du bas vers le haut de la colonne 1, dans le sens opposé au sens d'élution :

- la zéolithe ZSM-5 comme première phase stationnaire 11, cette zéolithe étant avantageusement activée par un traitement thermique préalable tel que décrit ci-dessus,
- une silice imprégnée de nitrate d'argent comme deuxième phase stationnaire 12, et
- une silice greffée par des groupes cyanopropyles comme troisième phase stationnaire 13.

On désigne respectivement par $M_{P1}$, $M_{P2}$, $M_{P3}$ les masses de la première, la seconde et la troisième phase stationnaire. Ces masses vérifient avantageusement les relations suivantes.

De préférence

$$M_{P2} \leq M_{P1} \leq 3\,M_{P2}$$

$$M_{P3} \leq M_{P1} \leq 5\,M_{P3}$$

$$M_{P3} \leq M_{P2} \leq 3\,M_{P3}$$

Encore plus préférentiellement,

$$M_{P2} \leq M_{P1} \leq 2\,M_{P2}$$

$$M_{P3} \leq M_{P1} \leq 4\,M_{P3}$$

$$M_{P3} \leq M_{P2} \leq 2{,}5\,M_{P3}$$

Dans l'exemple mis en oeuvre ci-dessous, les quantités de chaque phase stationnaire sont les suivantes :

$M_{P1}$ = 3,9-4,0g
$M_{P2}$ = 2,3-2,4g
$M_{P3}$ = 1,3-1,4g

Procédé de séparation

Le procédé de séparation selon l'invention, qui met en oeuvre une étape de séparation par chromatographie liquide, peut être mis en oeuvre en utilisant le kit de séparation et le dispositif décrits ci-dessus.

Avant introduction de l'échantillon comprenant un mélange de composés organiques, on stabilise la colonne 1 par rinçage avec du solvant. De préférence, le solvant utilisé est identique à celui qui sera utilisé pour l'étape d'élution. Avantageusement, on utilise de l'isooctane. L'échantillon du mélange de composés organiques est ensuite mis en solution avec l'éluant puis la solution ainsi obtenue est introduite dans le système de pompe 3 par les moyens d'introduction 5, puis dans la colonne 1 par les moyens de connexion 2.

L'échantillon qui est introduit en solution dans l'éluant dans la colonne 1, via les moyens d'introduction 5, le système de pompe 3 et les moyens de connexion 2, peut être un échantillon du mélange de composés organiques, tel qu'un échantillon d'huile brute, c'est-à-dire un mélange qui n'a subi aucun traitement préalable.

Il est cependant tout à fait envisageable de prévoir une étape de préparation de l'échantillon qui soit préalable à l'étape de séparation. Cette étape de préparation peut notamment consister en une étape de mise en solution de l'échantillon avec ou sans étape de filtration ultérieure. On peut également procéder à un chauffage de l'échantillon. Ces étapes préparatoires peuvent également être combinées entre elles.

Ainsi, dans le cas particulier où l'échantillon du mélange de composés organiques comprend des asphaltènes, il est particulièrement avantageux de réaliser une telle étape de préparation. Cette étape de préparation peut notamment consister à mettre en solution, par exemple dans du pentane ou de l'iso-octane, l'échantillon brut puis à filtrer les particules solides formées, parmi lesquelles les asphaltènes qui ont précipité dans le pentane, par exemple au moyen d'un filtre de diamètre de pores de l'ordre de 0,45 $\mu$m. Le filtrat est alors ensuite mis en solution avec l'éluant puis la solution obtenue est alors introduite dans le système de pompe 3 par les moyens d'introduction 5, puis dans la colonne 1 par les moyens de connexion 2.

Les composés de haut poids moléculaire et/ou hétéro-atomiques, notamment les composés très polaires, asphaltènes et résines, à base de N, S et/ou O, présents dans l'échantillon sont adsorbés par la troisième phase stationnaire 13 tandis que les composés moins polaires et aromatiques sont adsorbés par la deuxième phase stationnaire 12 de la colonne 1 et que les composés apolaires acycliques et, notamment les n-alcanes, sont adsorbés par la première phase stationnaire 11.

La phase mobile ou éluant est ensuite introduite, par les moyens d'introduction 4, dans le système de pompe 3 puis, par les moyens de connexion 2, dans la colonne 1.

L'élution par la phase mobile peut être une élution par gradient ou une élution isocratique. La phase mobile peut être choisie parmi le n-octane, l'isooctane et leurs mélanges. La phase mobile, ou éluant, est, avantageusement, l'isooctane (à 100%).

L'étape de séparation par chromatographie liquide peut être conduite à pression atmosphérique mais elle est, de préférence, mise en oeuvre sous pression, soit en colonne ouverte à basse pression, soit au moyen d'un dispositif de chromatographie liquide à moyenne pression (MPLC), soit au moyen d'un dispositif de chromatographie liquide à haute performance (HPLC). A cet effet, le dispositif selon l'invention comprend avantageusement des moyens permettant la mise sous pression de la colonne 1.

De préférence, cette étape de séparation est une étape de séparation par chromatographie dite "flash" ou basse pression. Typiquement, on applique, au moyen du système de pompe 3, une pression d'un gaz inerte pour la circulation de la phase mobile le long de la colonne 1. Cette pression appliquée, contrôlée au moyen d'un manomètre (non représenté) intégré au système de pompe 3, peut notamment être comprise entre 7 et 9 bars (soit environ 100 psi). Ainsi, l'étape de séparation est réalisée à des débits de phase mobile plus élevés qu'avec une séparation à pression atmosphérique.

Les fractions éluées recueillies à la base de la colonne 1 sont ensuite acheminées, par les moyens de connexion 6, dans des moyens de détection et d'analyse 7 puis dans des moyens de collecte 8 pour une utilisation ultérieure éventuelle des dites fractions.

Les fractions éluées peuvent également être collectées directement en sortie de colonne et analysées ultérieurement. Notamment, la configuration des différents éléments du dispositif et les moyens employés pour l'analyse dépendent de l'objectif recherché, à savoir si l'on met en oeuvre le procédé de séparation à l'échelle analytique ou à l'échelle préparative.

Ces moyens de détection et d'analyse 7 peuvent notamment être constitués par un réfractomètre différentiel (RD), un détecteur à UV, un détecteur par ionisation de flamme (FID) ou encore un spectromètre de masse

Parmi ces moyens de détection et d'analyse 7 qui viennent d'être cités, on distingue les moyens de détection proprement dits des moyens d'analyse.

En particulier, le réfractomètre différentiel (RD) est un moyen de détection non destructif, qui contrôle le début et la fin du pic d'iso-alcanes et de cycloalcanes et permet de collecter sélectivement la fraction d'iso-alcanes et de cycloalcanes. Le détecteur à UV, qui est également un moyen de détection non destructif, peut être couplé au dispositif selon l'invention dans le but de contrôler l'absence de composés aromatiques dans les fractions éluées recueillies à la base de la colonne 1. Il pourrait ainsi être disposé en amont du réfractomètre différentiel.

Le détecteur par ionisation de flamme (FID) et le spectromètre de masse permettent l'analyse des fractions éluées recueillies à la base de la colonne 1.

D'autres moyens de détections pourraient également être mis en oeuvre dans le dispositif selon l'invention. On peut par exemple citer un détecteur à diffusion de lumière (ELSD, Evaporative Light-Scattering Detector) qui est un moyen de détection destructif. Celui-ci devra par conséquent être disposé, au moyen d'un by-pass, en amont des moyens de collecte 8, afin de faire transiter une petite partie des fractions éluées recueillies à la base de la colonne 1 pour analyse, l'autre partie des fractions éluées étant recueillie dans les moyens de collecte 8.

Le procédé de séparation terminé, la colonne 1 peut être détachée du dispositif et remplacée par une nouvelle colonne.

Selon une variante, on peut prévoir de récupérer une ou plusieurs fractions retenues sur la colonne par un traitement approprié.

Exemple

Un échantillon d'huile provenant d'un gisement de pétrole brut et riche en benzène et autres composés aromatiques a été introduit dans un kit de séparation conforme à l'invention. Le procédé de séparation a été réalisé au moyen d'une colonne de 7,5 cm de longueur et de 1,7 cm de diamètre comprenant les trois phases stationnaires suivantes dans les quantités indiquées

- la zéolithe ZSM-5 comme première phase stationnaire 11, $MP_1$ = 3,9-4,0g,
- une silice imprégnée de nitrate d'argent (CAS 7761-88-8) comme deuxième phase stationnaire 12, $MP_2$ = 2,3-2,4g, et
- une silice greffée par des groupes cyanopropyles (fournie par Merck) comme troisième phase stationnaire 13, $MP_3$ = 1,3-1,4g.

Le procédé de séparation a été conduit par chromatographie dite "flash", dans les conditions opératoires particulières indiquées dans le tableau 2 ci-dessous.

**Tableau 2**

| Phase mobile | isooctane (100%) |
|---|---|

(suite)

| Mode d'élution | isocratique |
|---|---|
| Débit | 1 ou 2 ml/min |
| Température | température ambiante (22°C) |
| Pression | 7 à 9 bars |
| Volume d'échantillon injecté | 300 $\mu$l maximum |
| Durée de l'analyse | < à 10 min |

L'analyse des produits élués est faite au moyen des appareils suivants :
Système « flash » couplé à un RD qui contrôle le début et la fin du pic.

GC/FID : Appareil Agilent 7890 A.

Colonne GC : CpSil5CB - 100m x 530 $\mu$m x 0,5 $\mu$m - 0,33 bars - 2.2107 ml/min
Volume injecté : 5 $\mu$L.

Four : Température initiale = 30°C → 20min - 2°C/min → 300°C → 35 min - Total du run = 190 min
FID : Température = 300°C - Débit H2 = 30 ml/min - Débit air = 400 ml/min.

Spectrométrie de masse (GC/MS) :
Appareil Hewlett Packard HP 6890.

Colonne GC : DB-5 - 60m x 250 $\mu$m x 0,10 $\mu$m - 1,85 bars - 1,8 ml/min (He)
Volume injecté : 2,5 $\mu$L (mode SPLIT)
Four : Température initiale = 40°C → 6min - 2°C/min → 300°C → 60 min - Total du run = 196 min
MS: mode SIM - dwell time = 70 ms - ions m/z suivis: adamantanes: 135; 136; 149; 163; 177 - diamantanes: 187; 188; 201; 215 - triamantanes: 239; 240; 253.

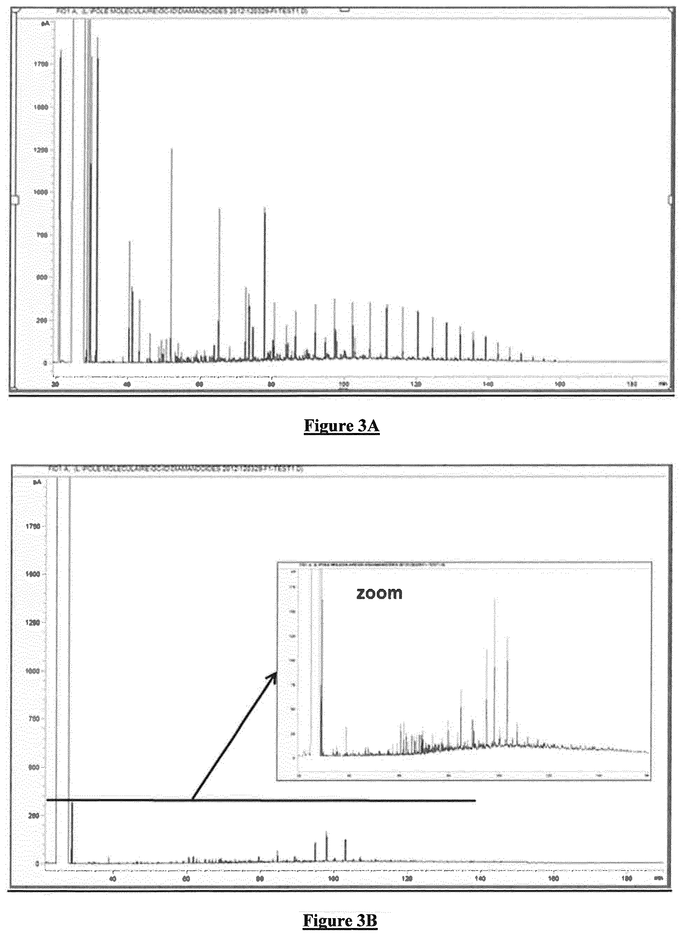

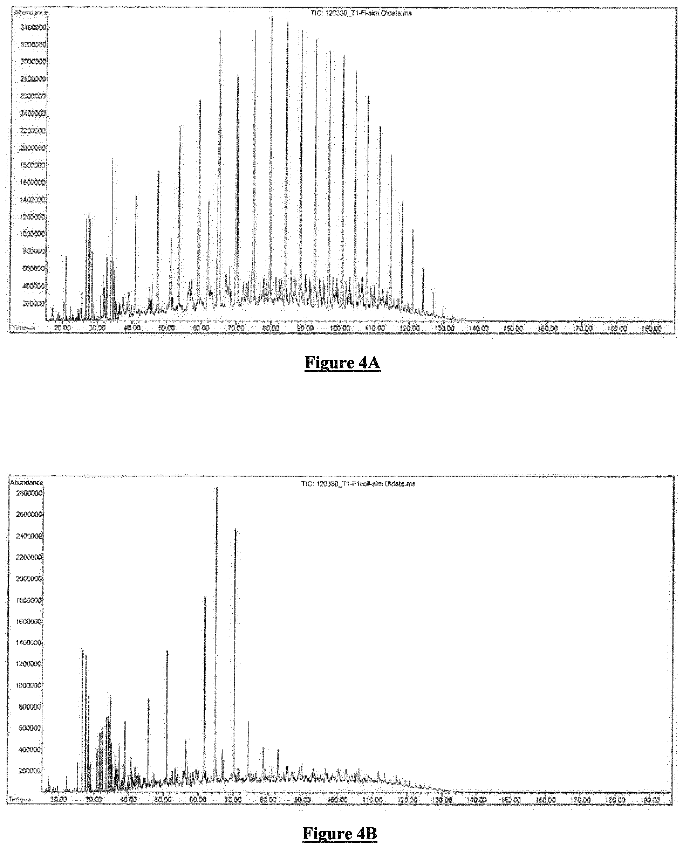

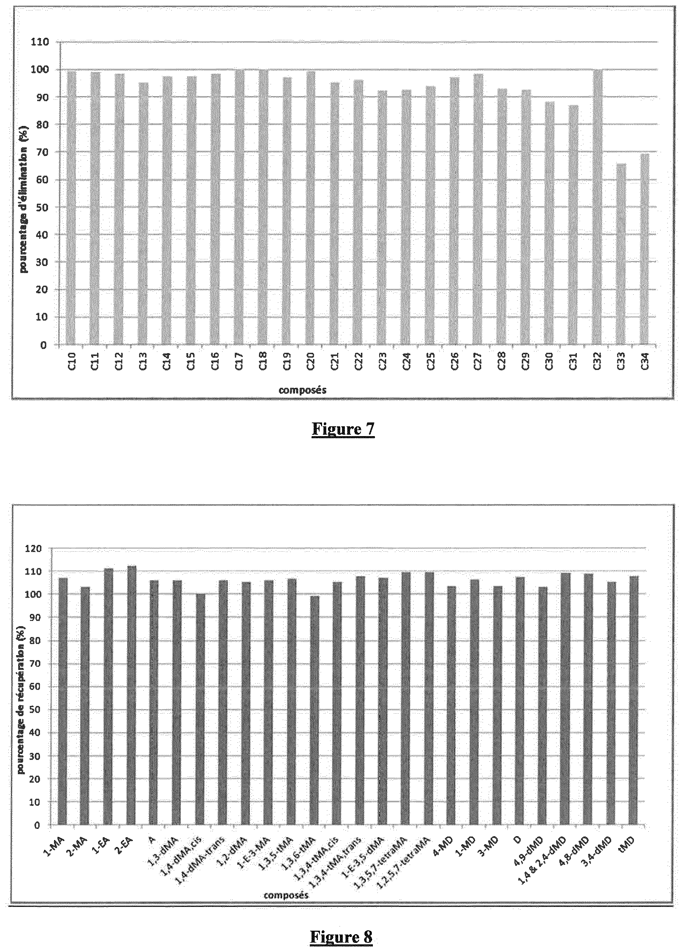

Les résultats des analyses qualitatives et quantitatives conduites après la mise en oeuvre du procédé de séparation dans les conditions opératoires précisées ci-dessus sont reportés dans les chromatogrammes des figures 3A, 3B, 4A, 4B, 5A, 5B, 6A et 6B ainsi que dans les histogrammes des figures 7 et 8.

Les chromatogrammes des figures 3A et 3B, d'une part, 4A et 4B d'autre part, sont directement comparables, car ils ont été réalisés avec le même facteur de dilution. La comparaison de ces chromatogrammes deux à deux montre que le procédé de séparation est très sélectif, avec une bonne élimination des n-alcanes, des composés aromatiques et des résines de l'échantillon d'huile initial.

Cette sélectivité est confirmée par la comparaison des chromatogrammes des figures 5A et 5B, d'une part, et ceux reportés aux figures 6A et 6B, d'autre part.

La bonne élimination des n-alcanes est quant à elle confirmée par l'histogramme de la figure 7. L'histogramme reporté à la figure 8 est construit à partir des aires obtenues par intégration des pics sur les chromatogrammes en extraction d'ions. Il montre par ailleurs que la fraction d'iso-alcanes et de cycloalcanes recueillie comprend des diamandoïdes dans des proportions à peu près constantes et supérieures à 85%, voire supérieures à 90% pour la plupart de ces composés, certains étant même proches des 100%. Il est précisé que les colonnes qui dépassent les 100% sont dues aux incertitudes analytiques.

On observe que le procédé de séparation selon l'invention, outre le fait d'être simple de mise en oeuvre, sélectif en termes de collecte d'iso-alcanes et de cycloalcanes et permettant cette collecte avec un bon niveau de rendement, est en outre rapide. A titre illustratif, on peut mentionner que le procédé de séparation ci-dessus a nécessité une heure et demie tandis que les procédés de l'art antérieur requièrent plusieurs heures, voire une journée pleine.

**Revendications**

1. Procédé de séparation d'une fraction d'iso-alcanes et de cycloalcanes à partir d'un échantillon d'un mélange de composés organiques comprenant une étape de séparation par chromatographie liquide, cette étape de séparation comprenant :

   - l'introduction de l'échantillon dans une colonne (1) comprenant au moins deux phases stationnaires (11, 12), la première phase stationnaire (11) étant en un matériau capable d'adsorber les n-alcanes et la deuxième phase stationnaire (12) étant en un matériau capable d'adsorber les composés aromatiques et les résines et/ou les asphaltènes,
   ladite première phase stationnaire comprenant une zéolithe de type aluminosilicate de sodium, avantageusement une zéolithe silicalite ZSM-5, et
ladite deuxième phase stationnaire comprenant une silice imprégnée de nitrate d'argent,
- l'élution par un éluant traversant d'abord la seconde phase stationnaire puis la première phase stationnaire, et
- la collecte de la fraction éluée.

2. Procédé de séparation selon la revendication 1, dans lequel le mélange de composés organiques provient d'un gisement de pétrole brut, d'huiles de schiste ou de coupes de pétrole.

3. Procédé de séparation selon la revendication 1 ou selon la revendication 2 dans lequel le mélange de composés organiques comprend des biomarqueurs choisis parmi les adamantanes, les diamantanes et les triamantanes.

4. Procédé de séparation selon l'une quelconque des revendications 1 à 3, dans lequel la colonne (1) comprend en outre une troisième phase stationnaire (13) en un matériau capable d'adsorber les composés dont la polarité est supérieure à la polarité des composés adsorbés par le matériau de la deuxième phase stationnaire (12), de préférence des composés de haut poids moléculaire et/ou hétéro-atomiques, notamment les hétéroalkyles comprenant au moins un atome choisi parmi : N (azote), S (soufre) et O (oxygène),
ladite troisième phase stationnaire comprenant une silice choisie parmi une silice vierge, une silice greffée par des groupes aminoalkyles, notamment aminopropyles et une silice greffée par des groupes cyanoalkyles et préférentiellement par des groupes cyanopropyles; et
l'élution de ladite colonne se faisant par un éluant traversant d'abord la troisième phase stationnaire, puis la seconde, puis la première phase stationnaire

5. Procédé de séparation selon l'une quelconque des revendications 1 à 4, dans lequel, en suivant le sens de l'élution, l'éventuelle troisième phase stationnaire (13) est disposée avant la deuxième phase stationnaire (12), la deuxième phase stationnaire (12) étant elle-même disposée avant la première phase stationnaire (11).

6. Procédé de séparation selon l'une quelconque des revendications 1 à 5, dans lequel l'étape de séparation par chromatographie liquide est une étape de séparation par chromatographie basse pression, dans laquelle la phase liquide est éluée sous une pression inférieure à 25 bars, avantageusement comprise entre 3 et 10 bars et, de préférence, comprise entre 7 et 9 bars.

7. Procédé de séparation selon l'une quelconque des revendications 1 à 6, dans lequel l'éluant est choisi parmi l'isooctane, le n-octane et leurs mélanges, avantageusement l'iso-octane.

8. Procédé de séparation selon l'une quelconque des revendications 1 à 7, comprenant en outre au moins une étape de préparation de l'échantillon préalable à l'étape de séparation, cette étape de préparation étant choisie parmi une étape de mise en solution, une étape de filtration, une étape de chauffage ou la combinaison de deux ou plus de ces étapes.

9. Procédé de séparation de diamandoïdes à partir d'un échantillon d'un mélange de composés organiques comprenant la mise en oeuvre du procédé de séparation selon l'une quelconque des revendications 1 à 8 suivie d'une étape de séparation des diamandoïdes à partir de la fraction éluée.

10. Kit de séparation par chromatographie liquide comprenant une colonne (1) munie d'une entrée (1a) permettant l'introduction de produits et de l'éluant et d'une sortie (1b) permettant la récupération de l'éluant, la colonne (1) comprenant au moins deux phases stationnaires, la première phase stationnaire (11) étant en un matériau capable d'adsorber les n-alcanes et comprend une zéolithe de type aluminosilicate de sodium, avantageusement une zéolite silicalite ZSM-5; et la deuxième phase stationnaire (12) étant en un matériau capable d'adsorber les composés aromatiques et les résines et/ou les asphaltènes et comprend une silice imprégnée de nitrate d'argent,
l'éluant traversant d'abord la seconde phase stationnaire puis la première phase stationnaire.

11. Kit selon la revendication 10, dans lequel la colonne (1) comprend en outre une troisième phase stationnaire (13) en un matériau capable d'adsorber les composés dont la polarité est supérieure à la polarité des composés adsorbés par le matériau de la deuxième phase stationnaire (12), de préférence des composés de haut poids moléculaire et/ou hétéro-atomiques, notamment les hétéroalkyles comprenant au moins un atome choisi parmi : N (azote), S (soufre) et O (oxygène),
ladite troisième phase stationnaire comprenant une silice choisie parmi une silice vierge, une silice greffée par des groupes aminoalkyles, notamment aminopropyles et une silice greffée par des groupes cyanoalkyles et préférentiellement par des groupes cyanopropyles; et

l'éluant traversant d'abord la troisième phase stationnaire, puis la seconde, puis la première phase stationnaire.

12. Kit selon l'une quelconque des revendications 10 à 11, dans lequel, en suivant le sens de l'élution, l'éventuelle troisième phase stationnaire (13) est disposée avant la deuxième phase stationnaire (12), la deuxième phase stationnaire (12) étant elle-même disposée avant la première phase stationnaire (11).

13. Dispositif de séparation par chromatographie liquide et d'analyse d'un échantillon comprenant :

- un kit selon l'une quelconque des revendications 10 à 12,
- des moyens d'introduction (5), dans la colonne (1), de l'échantillon,
- des moyens d'introduction (4), dans la colonne (1), d'au moins un éluant,
- éventuellement des moyens de mise sous pression de la colonne (1),
- éventuellement des moyens de détection et d'analyse (7) des fractions éluées, et
- des moyens de collecte (8) des fractions éluées.

14. Utilisation du kit selon l'une quelconque des revendications 10 à 12 et/ou du dispositif selon la revendication 13 pour séparer une fraction d'iso-alcanes et/ou de cycloalcanes, notamment de diamandoïdes à partir d'un échantillon comprenant un mélange de composés organiques, ce mélange pouvant notamment provenir d'un gisement de pétrole brut, d'huiles de schiste ou de coupes de pétrole.

**Patentansprüche**

1. Verfahren zur Abscheidung einer Fraktion von Isoalkanen und Cycloalkanen aus einer Probe einer Mischung von organischen Verbindungen, die einen Schritt zur Abscheidung durch Flüssigkeitschromatographie umfasst, wobei der Schritt zur Abscheidung umfasst:

- Einbringen der Probe in eine Säule (1), die mindestens zwei stationäre Phasen (11, 12) umfasst, wobei die erste stationäre Phase (11) aus einem Material besteht, das n-Alkane adsorbieren kann, und die zweite stationäre Phase (12) aus einem Material besteht, das aromatische Verbindungen und Harze und/oder Asphaltene adsorbieren kann,
wobei

✔ die erste stationäre Phase einen Natriumaluminiumsilikat-Zeolithen, vorzugsweise einen ZSM-5-Silikalit-Zeolithen, umfasst, und
✔ die zweite stationäre Phase eine mit Silbernitrat imprägnierte Kieselsäure umfasst,

- Eluieren durch einen Eluenten, der zunächst die zweite stationäre Phase und dann die erste stationäre Phase durchläuft, und
- Sammeln der eluierten Fraktion.

2. Verfahren zur Abscheidung nach Anspruch 1, wobei die Mischung von organischen Verbindungen aus einer Rohöllagerstätte, Schieferölen oder Ölschnitten stammt.

3. Verfahren zur Abscheidung nach Anspruch 1 oder Anspruch 2, wobei die Mischung von organischen Verbindungen Biomarker umfasst, ausgewählt aus Adamantanen, Diamantanen und Triamantanen.

4. Verfahren zur Abscheidung nach einem der Ansprüche 1 bis 3, wobei die Säule (1) ferner eine dritte stationäre Phase (13) aus einem Material umfasst, das in der Lage ist, Verbindungen zu adsorbieren, deren Polarität größer ist als die Polarität der Verbindungen, die durch das Material der zweiten stationären Phase (12) adsorbiert werden, vorzugsweise hochmolekulare und/oder heteroatomische Verbindungen, insbesondere Heteroalkyle, die mindestens ein Atom umfassen, ausgewählt aus: N (Stickstoff), S (Schwefel) und O (Sauerstoff, wobei

✔ die dritte stationäre Phase eine Kieselsäure umfasst, ausgewählt aus nativem Siliziumdioxid, Siliziumdioxid, das durch Aminoalkylgruppen, insbesondere Aminopropyle, gepfropft ist, und Siliziumdioxid, das durch Cyanoalkylgruppen und vorzugsweise durch Cyanopropylgruppen gepfropft ist; und

✓ das Eluieren dieser Säule durch einen Eluenten durchgeführt wird, der zunächst die dritte stationäre Phase, dann die zweite, dann die erste stationäre Phase durchläuft.

5. Verfahren zur Abscheidung nach einem der Ansprüche 1 bis 4, wobei der Richtung der Elution folgend die etwaige dritte stationäre Phase (13) vor der zweiten stationären Phase (12) angeordnet ist, wobei die zweite stationäre Phase (12) selbst vor der ersten stationären Phase (11) angeordnet ist.

6. Verfahren zur Abscheidung nach einem der Ansprüche 1 bis 5, wobei es sich bei dem Schritt zur Abscheidung durch Flüssigkeitschromatographie um einen Schritt zur Abscheidung durch Niederdruckchromatographie handelt, wobei die flüssige Phase bei einem Druck von weniger als 25 bar, vorzugsweise zwischen 3 und 10 bar und bevorzugt zwischen 7 und 9 bar eluiert wird.

7. Verfahren zur Abscheidung nach einem der Ansprüche 1 bis 6, wobei der Eluent ausgewählt ist aus Isooctan, n-Octan und Mischungen davon, vorzugsweise Isooctan.

8. Verfahren zur Abscheidung nach einem der Ansprüche 1 bis 7, ferner umfassend mindestens einen Schritt zur Vorbereitung der Probe vor dem Abscheidungsschritt, wobei der Vorbereitungsschritt ausgewählt ist aus einem Lösungsschritt, einem Filtrationsschritt, einem Erwärmungsschritt oder einer Kombination von zwei oder mehreren dieser Schritte.

9. Verfahren zur Abscheidung von Diamandoiden aus einer Probe einer Mischung von organischen Verbindungen, umfassend das Durchführen des Verfahrens zur Abscheidung nach einem der Ansprüche 1 bis 8, gefolgt von einem Schritt zum Abscheiden der Diamandoide aus der eluierten Fraktion.

10. Kit zur Abscheidung durch Flüssigkeitschromatographie, umfassend eine Säule (1), die mit einem Einlass (1a) zum Einführen von Produkten und dem Eluenten und einem Auslass (1b) zum Rückgewinnen des Eluenten versehen ist, wobei die Säule (1) mindestens zwei stationäre Phasen umfasst, wobei die erste stationäre Phase (11) aus einem Material besteht, das n-Alkane adsorbieren kann, und einen Natriumaluminiumsilikat-Zeolithen, vorzugsweise einen ZSM-5-Silikalit-Zeolithen, umfasst; und die zweite stationäre Phase (12) aus einem Material besteht, das aromatische Verbindungen und Harze und/oder Asphaltene adsorbieren kann und eine mit Silbernitrat imprägnierte Kieselsäure umfasst, wobei der Eluent zuerst die zweite stationäre Phase und dann die erste stationäre Phase durchläuft.

11. Kit nach Anspruch 10, wobei die Säule (1) ferner eine dritte stationäre Phase (13) aus einem Material umfasst, das in der Lage ist, Verbindungen zu adsorbieren, deren Polarität größer ist als die Polarität der Verbindungen, die durch das Material der zweiten stationären Phase (12) adsorbiert werden, vorzugsweise hochmolekulare und/oder heteroatomische Verbindungen, insbesondere Heteroalkyle, die mindestens ein Atom umfassen, ausgewählt aus: N (Stickstoff), S (Schwefel) und O (Sauerstoff),

✓ wobei die dritte stationäre Phase eine Kieselsäure umfasst, ausgewählt aus nativem Siliziumdioxid, Siliziumdioxid, das durch Aminoalkylgruppen, insbesondere Aminopropyle, gepfropft ist, und Siliziumdioxid, das durch Cyanoalkylgruppen und vorzugsweise durch Cyanopropylgruppen gepfropft ist; und
✓ wobei der Eluent zuerst die dritte stationäre Phase, dann die zweite stationäre Phase und anschließend die erste stationäre Phase durchläuft.

12. Kit nach einem der Ansprüche 10 bis 11, wobei der Richtung der Elution folgend die etwaige dritte stationäre Phase (13) vor der zweiten stationären Phase (12) angeordnet ist, wobei die zweite stationäre Phase (12) selbst vor der ersten stationären Phase (11) angeordnet ist.

13. Vorrichtung zur Abscheidung durch Flüssigkeitschromatographie und Analyse einer Probe, umfassend:

- ein Set nach einem der Ansprüche 10 bis 12,
- Mittel zum Einführen (5) der Probe in die Säule (1),
- Mittel zum Einführen (4) von mindestens einem Eluenten in die Säule (1),
- gegebenenfalls Mittel zum Druckbeaufschlagen der Säule (1),
- gegebenenfalls Mittel zum Erkennen und Analysieren (7) der eluierten Fraktionen, und
- Mittel zum Sammeln (8) der eluierten Fraktionen.

**14.** Verwendung des Kits nach einem der Ansprüche 10 bis 12 und/oder der Vorrichtung nach Anspruch 13 zur Abscheidung einer Fraktion von Isoalkanen und/oder Cycloalkanen, insbesondere Diamandoiden, aus einer Probe, die eine Mischung von organischen Verbindungen umfasst, wobei die Mischung insbesondere aus einer Rohöllagerstätte, Schieferölen oder Ölschnitten stammen kann.

**Claims**

**1.** Process for separating a fraction of isoalkanes and cycloalkanes from a sample of a mixture of organic compounds comprising a step of separation by liquid chromatography, said separation step comprising:

- introduction of the sample into a column (1) comprising at least two stationary phases (11, 12), the first stationary phase (11) being of a material capable of adsorbing n-alkanes and the second stationary phase (12) being of a material capable of adsorbing aromatic compounds and resins and/or asphaltenes,

✔ said first stationary phase comprising a zeolite of sodium aluminosilicate type, advantageously a ZSM-5 silicalite zeolite, and
✔ said second stationary phase comprising a silica impregnated with silver nitrate,

- elution by an eluent first passing through the second stationary phase then the first stationary phase, and
- collection of the eluted fraction.

**2.** Separation process according to claim 1, wherein the mixture of organic compounds comes from an oilfield, shale oils or petroleum fractions.

**3.** Separation process according to claim 1 or claim 2 wherein the mixture of organic compounds comprises biomarkers selected from adamantanes, diamantanes and triamantanes.

**4.** Separation process according to any one of claims 1 to 3, wherein the column (1) further comprises a third stationary phase (13) of a material capable of adsorbing compounds whose polarity is higher than the polarity of the compounds adsorbed by the material of the second stationary phase (12), preferably high molecular weight and/or heteroatomic compounds, in particular heteroalkyls comprising at least one atom selected from: N (nitrogen), S (sulfur) and O (oxygen),

✔ said third stationary phase comprising a silica selected from virgin silica, silica grafted with aminoalkyl groups, in particular aminopropyls, and silica grafted with cyanoalkyl groups and preferentially with cyanopropyl groups; and
✔ elution of said column being carried out by an eluent first passing through the third stationary phase, then the second, then the first stationary phase

**5.** Separation process according to any one of claims 1 to 4, wherein, following the direction of elution, the optional third stationary phase (13) is arranged before the second stationary phase (12), the second stationary phase (12) itself being arranged before the first stationary phase (11).

**6.** Separation process according to any one of claims 1 to 5, wherein the step of separation by liquid chromatography is a step of separation by low-pressure chromatography, wherein the liquid phase is eluted under a pressure of less than 25 bars, advantageously comprised between 3 and 10 bars and, preferably, comprised between 7 and 9 bars.

**7.** Separation process according to any one of claims 1 to 6, wherein the eluent is selected from isooctane, n-octane and mixtures thereof, advantageously isooctane.

**8.** Separation process according to any one of claims 1 to 7, further comprising at least one step of preparation of the sample prior to the separation step, said preparation step being selected from a solubilization step, a filtration step, a heating step or the combination of two or more of these steps.

**9.** Process for separating diamondoids from a sample of a mixture of organic compounds comprising the implementation of the separation process according to any one of claims 1 to 8 followed by a step of separation of diamondoids from the eluted fraction.

**10.** Kit for separation by liquid chromatography comprising a column (1) provided with an inlet (1a) allowing the introduction of products and eluent and an outlet (1b) allowing the recovery of the eluent, the column (1) comprising at least two stationary phases, the first stationary phase (11) being of a material capable of adsorbing n-alkanes and comprises a zeolite of sodium aluminosilicate type, advantageously a ZSM-5 silicalite zeolite; and the second stationary phase (12) being of a material capable of adsorbing aromatic compounds and resins and/or asphaltenes and comprises a silica impregnated with silver nitrate, the eluent first passing through the second stationary phase then the first stationary phase.

**11.** Kit according to claim 10, wherein the column (1) further comprises a third stationary phase (13) of a material capable of adsorbing compounds whose polarity is higher than the polarity of the compounds adsorbed by the material of the second stationary phase (12), preferably high molecular weight and/or heteroatomic compounds, in particular heteroalkyls comprising at least one atom selected from: N (nitrogen), S (sulfur) and O (oxygen),

> ✔ said third stationary phase comprising a silica selected from virgin silica, silica grafted with aminoalkyl groups, in particular aminopropyls, and silica grafted with cyanoalkyl groups and preferentially with cyanopropyl groups; and
> ✔ the eluent first passing through the third stationary phase, then the second, then the first stationary phase.

**12.** Kit according to any one of claims 10 to 11, wherein, following the direction of elution, the optional third stationary phase (13) is arranged before the second stationary phase (12), the second stationary phase (12) itself being arranged before the first stationary phase (11).

**13.** Device for separation by liquid chromatography and analysis of a sample comprising:

> - a kit according to any one of claims 10 to 12,
> - means (5) for introducing the sample into the column (1),
> - means (4) for introducing at least one eluent into the column (1),
> - optionally means for pressurizing the column (1),
> - optionally means (7) for detecting and analyzing the eluted fractions, and
> - means (8) for collecting the eluted fractions.

**14.** Use of the kit according to any one of claims 10 to 12 and/or of the device according to claim 13 to separate a fraction of isoalkanes and/or cycloalkanes, in particular diamondoids, from a sample comprising a mixture of organic compounds, which mixture may in particular come from an oilfield, shale oil or petroleum fractions.

Figure 1

Figure 2

**Figure 3A**

**Figure 3B**

**Figure 4A**

**Figure 4B**

**Figure 5A**

**Figure 5B**

**Figure 6A**

**Figure 6B**

**Figure 7**

**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L. HUANG et al.** A novel method for isolation of diamondoids from crude oils for compound-specific isotope analysis. *Organic Geochemistry,* 2011, vol. 42, 566-571

- **M. AUDINO et al.** Macrocyclic alkanes in crude oils and sediment extracts: enrichment using molecular sieves. *Organic Geochemistry,* 2004, vol. 35, 661-663
- **M. ZHIBIN WEI et al.** Thidiamondoids as proxies for the extent of thermochemical sulfate réduction. *Organic Geochemistry,* 2012, vol. 44, 53-70